## Europäisches Patentamt
## European Patent Office
## Office européen des brevets

(11) Publication number: **0 030 463**
**B1**

(12) **EUROPEAN PATENT SPECIFICATION**

(45) Date of publication of patent specification: **24.09.86**

(21) Application number: **80304397.5**

(22) Date of filing: **05.12.80**

(51) Int. Cl.⁴: **G 06 F 13/00**

(54) Buffer memory control system.

(30) Priority: **06.12.79 JP 158417/79**

(43) Date of publication of application:
**17.06.81 Bulletin 81/24**

(45) Publication of the grant of the patent:
**24.09.86 Bulletin 86/39**

(84) Designated Contracting States:
**DE FR GB**

(56) References cited:
**FR-A-1 565 156**
**FR-A-2 151 425**
**FR-A-2 260 830**
**US-A-3 771 137**
**US-A-3 967 247**

**IBM TECHNICAL DISCLOSURE BULLETIN, vol. 14, no. 12, May 1972, page 3583, New York (USA); W.F. BAEUSOLEIL et al.: "Store in buffer - update".**

(73) Proprietor: **FUJITSU LIMITED**
**1015, Kamikodanaka Nakahara-ku**
**Kawasaki-shi Kanagawa 211 (JP)**

(72) Inventor: **Masanori, Takahashi**
**No. 31-6, Higashinippori 5-chome**
**Arakawa-ku Tokyo, 116 (JP)**

(74) Representative: **Bedggood, Guy Stuart et al**
**Haseltine Lake & Co. Hazlitt House 28**
**Southampton Buildings Chancery Lane**
**London WC2A 1AT (GB)**

Courier Press, Leamington Spa, England.

## Description

The present invention relates to a buffer memory control system which employs a swap system which processes an ordinary memory request only to a buffer memory and, when data of a requested address does not exist in the buffer memory, moves out from the buffer memory to a main memory any one of the blocks in the buffer memory and moves from the main memory into the buffer memory a block including data of the requested address.

In a conventional processor having a buffer memory and a main memory, when data is to be written into the buffer memory, a tag is retrieved to decide whether data of a requested address (e.g. whether data corresponding to a requested address) is stored in the buffer memory, and when the data of the requested address does exist in the buffer memory, a block including the data of the requested address is read out from the buffer memory and merged with write data and then written again into the buffer memory. When the data of a requested address does not exist in the buffer memory, a replace block of the buffer memory (e.g. a block of the buffer memory to be replaced), the replace block being determined by a replace circuit, is moved out from the buffer memory to the main memory and then a block including the data of the requested address is read out from the main memory and merged with the write data, thereafter being written in the buffer memory. That is, in a case in which the data of the requested address does not exist in the buffer memory, a block including data of the requested address is moved into the buffer memory from the main memory.

Incidentally, in the processing of a write instruction (a block store instruction) in relation to an area of a size equal to or an integral multiple of a block, which is a unit in terms of which the buffer memory is controlled, since the entire block is rewritten, the contents of the block which is moved into the buffer memory from the main memory at the time of execution of the write instruction is of no significance (e.g. is out of date). Accordingly, in the processing of a write instruction the time for reading out the main memory corresponds to invalid operation time. The swap system is disclosed, for example, in US—A—3 771 137 and 3 848 234.

US—A—3 967 247 discloses a control system according to the pre-characterising part of claim 1.

According to the present invention there is provided a control system for a buffer memory and a main memory, operable on the basis of a swap procedure in which ordinary memory access involves access only to the buffer memory, and operable so that, when data of a requested address does not exist in the buffer memory, a replace block is moved from the buffer memory into the main memory and a block including data of the requested address is moved from the main memory into the buffer memory (the swap procedure), the control system comprising means for detecting whether or not a block including the data of the requested address exist in the buffer memory, and means for detecting whether or not a replace block has been changed since it was loaded into the buffer memory, the system being operable, when it is detected that data corresponding to a requested address does not exist in the buffer memory, to move the replace block from the buffer memory to the main memory if the replace block has been changed since it was loaded into the buffer memory, characterised in that when data of a size equal to or an integral multiple of a block of the buffer memory is to be written and it is detected that data corresponding to the requested write address does not exist in the buffer memory, the data to be written is written into the buffer memory space of the replace block, without moving a block of data corresponding to the requested write address from the main memory into the buffer memory.

Embodiments of the present invention can provide for an increase in the processing speed of a write instruction in relation to an area of a size equal to or an integral multiple of a block which is a control unit of the buffer memory.

An embodiment of the present invention provides a buffer memory control system of the swap system which is adapted so that when no data of the requested address exists in the buffer memory, write data is written directly into the buffer memory under specified conditions.

Reference is made, by way of example, to the accompanying drawings, in which:—

Figure 1 is a schematic block diagram illustrating an embodiment of the present invention;

Figure 2 is a schematic block diagram illustrating a data memory part of the embodiment of Figure 1;

Figure 3 is a schematic block diagram illustrating a buffer memory write control circuit of the embodiment of Figure 1;

Figure 4 is a schematic diagram for assistance in explanation of a control shift register of the embodiment of Figure 1;

Figure 5 is a schematic block diagram illustrating principal parts of a write data control circuit of the buffer memory write control circuit of Figure 3; and

Figure 6 is a schematic block diagram illustrating principal parts of a write control circuit of the embodiment of Figure 1.

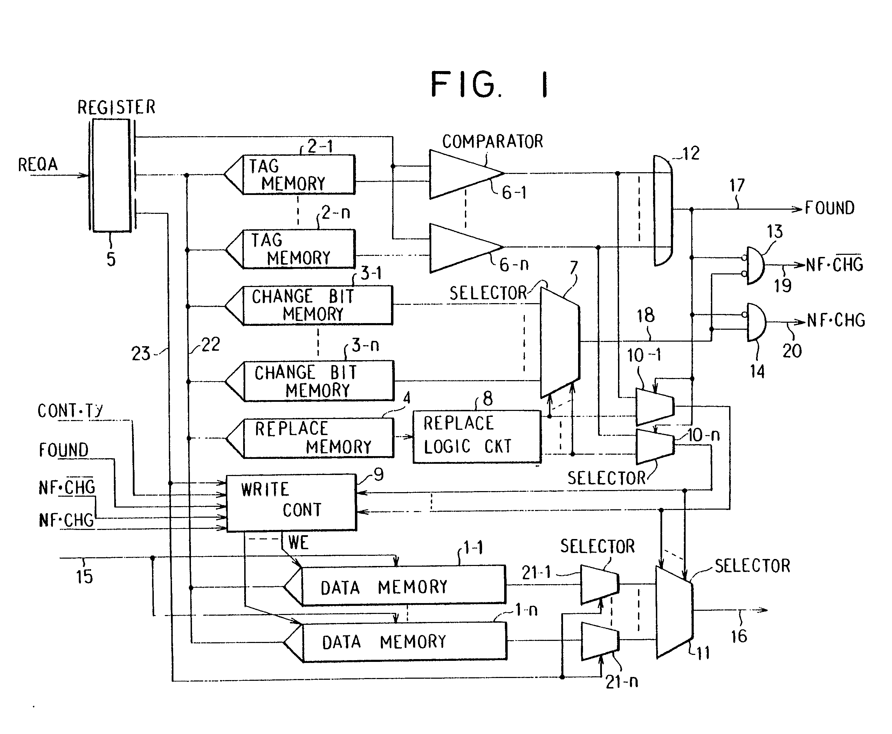

Figure 1 illustrates in block form an embodiment of the present invention. In Figure 1, 1-1 to 1-n are data memories for storing data, which memories are each based upon a control unit such that, for example, 64 bytes form one block; 2-1 to 2-n are tag memories; 3-1 to 3-n are change bit memories for storing indications of the presence or absence of changes in the contents of the data memories in correspondence with their blocks (e.g. whether the contents have been changed since they were brought into the data memories from main memory); 4 is a replace memory for storing information relating to replace blocks of the data memories (e.g. blocks which can be moved out of the data memories to make space for a required block); 5 is a register for setting therein a requested address REQA; 6-1 to 6-n are comparators for comparing low-order bits set in the register 5 with the contents of the tag memories; 7, 10-1 to 10-n, 11 and 21-1 to 21-n are selectors; 8 is a replace logic circuit; 9 is a write control circuit for controlling writing of data into the data memories; 12 is an OR circuit; 13 and 14 are gate circuits; 15 is a write data line; 16 is a read data line; 17 is a coincidence detection signal line on which a coincidence signal FOUND is provided; 18 is a change detection signal line; 19 is a signal line on which a noncoincidence-non-change signal $NF \cdot \overline{CHG}$ is provided; 20 is a signal line on which a noncoincidence-change signal $NF \cdot CHG$ is provided; 22 is a set address line; and 23 is an intra-block address line.

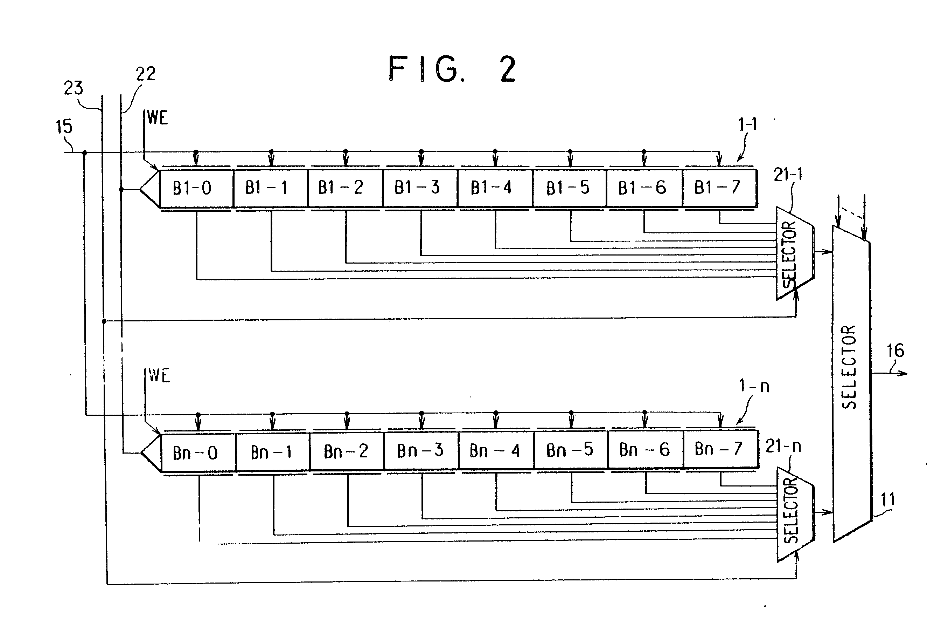

Figure 2 is a block diagram of the data memory part 1-1 to 1-n in Figure 1. Each block of the data memories 1-1 to 1-n has a capacity of 64 bytes and each is constituted by access units, e.g. B1-0 to B1-7 ... Bn-0 to Bn-7, each access unit including eight bytes. Data read out in accordance with a set address from the address line 22 is selected by the selectors 21-1 to 21-n in accordance with an intra-block address from the address line 23, and thereafter is applied to the selector 11. The selector 11 performs a select operation in accordance with signals from the selectors 10-1 to 10-n and provides selected data on read data line 16.

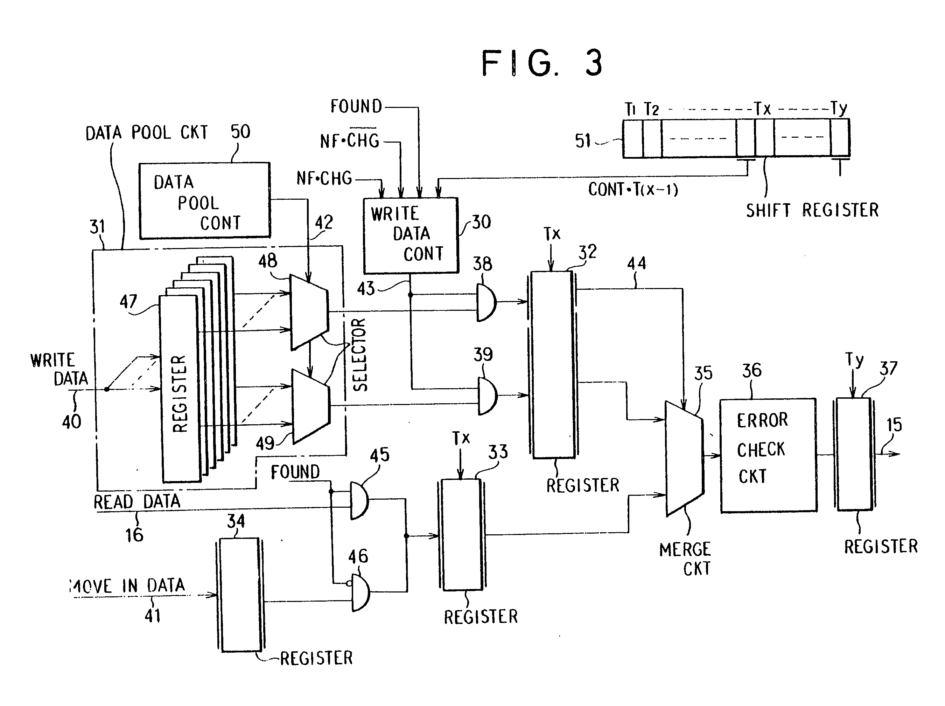

Figure 3 illustrates, in block form a buffer memory write control circuit. Reference numeral 30 is a write data control circuit, which is supplied with the coincidence detection signal FOUND, the noncoincidence nonchange signal $NF \cdot \overline{CHG}$, the noncoincidence-change signal $NG \cdot CHG$ and a control signal $CONT \cdot T(\times-1)$ of a timing $T(x-1)$ from a control shift register 51 to provide a read enable signal on a signal line 43. Reference numeral 31 designates a data pool circuit, which is composed of registers 47 for setting therein write data from a write data line 40 and selectors 48 and 49; 32 identifies a write data register, in which data is set at a timing Tx; 33 denotes a read data register, in which data is set at the timing Tx; 34 represents a register for setting move in data (data to be moved into the buffer memory made up of data memories 1-1 to 1-n) from a move in data line 41; 35 shows a merge circuit, which merges data from the registers 32 and 33 in response to a byte mark signal from a byte mark signal line 44; 36 refers to an error check circuit; 37 indicates a register for setting data at a timing Ty; 38, 39, 45 and 46 designate gate circuits; 50 identifies a data pool circuit, which applies a read address via a read address line 42 to selectors 48 and 49; and 51 denotes a shift register for sequentially shifting a control signal at timings T1 to Tx to Ty.

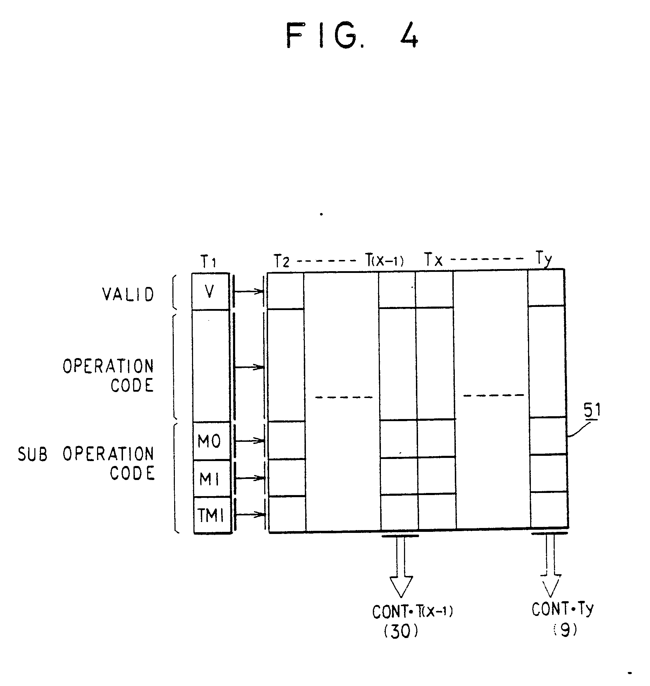

Figure 4 is explanatory of the shift register 51 for control use. A valid signal V, operation codes and sub operation codes are set in the first stage of the shift register 51 at timing T1 and shifted to the following stages at timings T2 to Tx to Ty. At timing $T(x-1)$ the control signal $CONT \cdot T(x-1)$ including the valid signal, the operation codes and the sub operation codes is applied to the write data control circuit 30. At the timing Ty a control signal $CONT \cdot Ty$ is provided to the write control circuit 9. The sub operation code MO becomes ON in the case of a move out operation (when data is to be moved out from the buffer memory), the sub operation code MI becomes ON in the case of a move in operation (when data is to be moved into the buffer memory) and the sub operation code TMI becomes ON in the case of a tag move in operation (when tag data is to be moved into the tag memories).

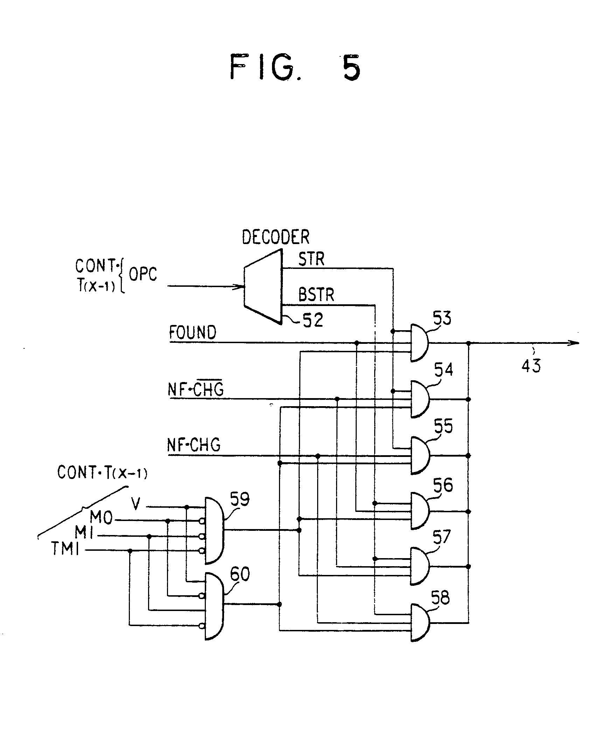

Figure 5 shows in block form the write data control circuit 30 in the buffer memory write control circuit (Figure 3). Reference numeral 52 indicates a decoder for decoding an operation code OPC; and 53 to 60 designate gate circuits. To the gate circuits 59 and 60 are applied the valid signal V, the move out signal MO, the move in signal MI and the tag move in signal TMI of the control signal $CONT \cdot T(x-1)$ and when only the valid signal V is "1", the output from the gate circuit 59 becomes "1". When the valid signal V and the move in signal MI are "1", the gate circuit 60 outputs "1". The outputs STR and BSTR from the decoder 52 are a store signal and a block store signal respectively and a read enable signal is provided on the signal line 43.

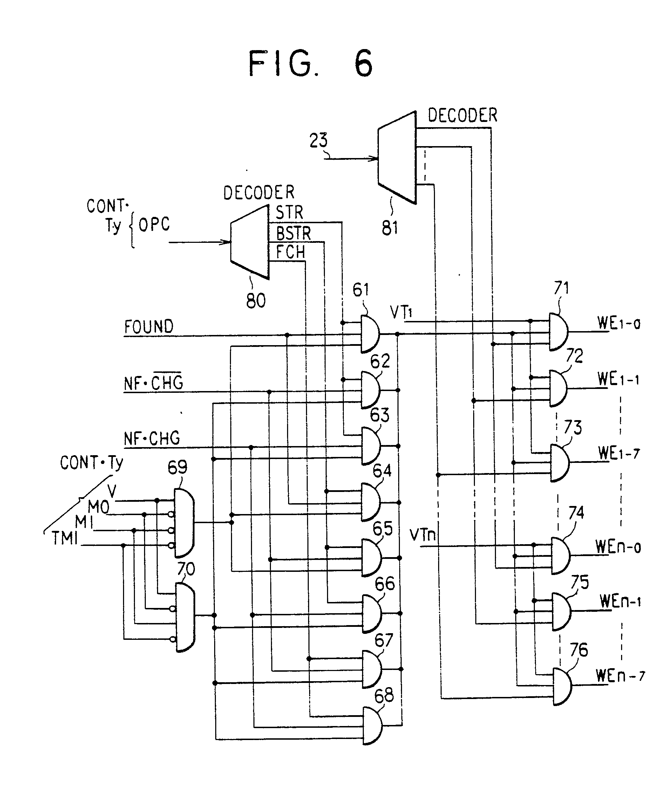

Figure 6 illustrates in block form principal parts of the write control circuit (9 in Figure 1). Reference numerals 61 to 76 indicate gate circuits; and 80 and 81 designate decoders. To the gate circuits 69 and 70 are provided the valid signal V, the move out signal MO, the move in signal MI and the tag move in signal TMI of the control signal $CONT \cdot Ty$. The decoder 80 decodes the operation code OPC of the control signal $CONT \cdot Ty$ to output a store signal STR, a block store signal BSTR or a fetch signal FCH. The decoder 81 decodes the intra-block address from the address line 23 to designate access units B1-0 to Bn-0 ... B1-7 to Bn-7 in the blocks of the data memory. For example, if a three-bit intra-block address is "010", then access units B1-2 to Bn-2 in the blocks are designated. The outputs from the gate circuits 71 to 76 become write enable signals WE1-0 to WE1-7 ... WEn-0 to WEn-7 respectively corresponding to one another in the blocks of the data memory. Reference characters VT1 to VTn indicate output signals from the selectors 10-1 to 10-n in Figure 1.

Next, a description will be given of the operation of the present invention.

In the control shift register 51 are set a valid signal (validity indicating signal), operation codes and sub operation codes of operation information which is executed for a memory access request. In ordinary read processing, the operation code indicates a fetch and the valid signal V becomes "1". The requested address REQA is set in the register 5. A first flow is to (a) read out the tag memories 2-1 to 2-n for detecting whether data of the requested address exists in the buffer memory, that is, whether the data exists in the data memories 1-1 to 1-n, (b) read out the replace memory 4 for determining a replace block or for updating the content of the replace memory 4, (c) read out the change bit memories 3-1 to 3-n, however, in a case in which the data of the requested address does not exist in the buffer memory and (d) set read data in the register 37. Next, according to conditions in the first flow, the sub operation code is set in the control shift register 51 and the operation proceeds to a move out flow (operational steps for moving data out of data memories 1-1 to 1-n), a move in flow (operational steps for moving data into the data memories) and a tag move in flow (operational steps for moving data into the tag memories).

In such ordinary read processing, the contents read out from the tag memories 2-1 to 2-n and the requested address set in the register 5 are compared by the comparators 6-1 to 6-n and when the data of the requested address exists in the data memories 1-1 to 1-n, one of the comparators 6-1 to 6-n outputs "1", whereby the coincidence detection signal FOUND on the signal line 17 becomes "1". Further, one of the selectors 10-1 to 10-n outputs "1", which is delivered to the selector 11 and the write control circuit 9. In accordance with the set address of the requested address REQA data is read out from the data memories 1-1 to 1-n and in accordance with the intra-block address the selectors 21-1 to 21-n each provide read out data relating to one part of the designated block to the selector 11. By the outputting of "1" from one of the selectors 10-1 to 10-n, the selector 11 selects as read out data one part of the block of the same set address as that of which parts were selected by the selectors 21-1 to 21-n to provide as read out data one part of one block on the read data line 16.

Where the data of the requested address does not exist in the data memories 1-1 to 1-n, the coincidence detection signal becomes "0". By reading out the replace memory 4 a replace block (a block to be moved from memories 1-1 to 1-n to main memory) is determined by the replace logic circuit 8. Further, the change bit memories 3-1 to 3-n are read out and if no bit change is detected (e.g. if it is indicated that the data of the replace block has not been changed since it was moved into the data memories), then the non-coincidence-nonchange signal NF.$\overline{\text{CHG}}$ on the signal line 19 becomes "1", and if a bit change is detected (if the replace block has been changed since it was moved into the data memories), the noncoincidence-change signal NF.CHG on the signal line becomes "1".

In a case where NF.$\overline{\text{CHG}}$="1", the operation proceeds to move in flow (e.g. operations to move in the data of the requested address into the space occupied in the data memories by the replace block—since the replace block is "unchanged" an up-to-date copy is in main memory). That is, the operation code indicates a fetch and the move in signal MI of the sub operation code becomes "1". In move in flow, since 64 bytes of data are written, the move in of one block to the data memory is accomplished by applying the move in flow of eight-byte units processing to the shift register 51 eight times in succession. In the move in flow, data read out from the main memory is set in the register 34 from the move in data line 41 and then set in the register 33 via the gate circuit 46 at the timing Tx. When the byte mark signals from the signal line 44 are all "0", the merge circuit 35 outputs the content of the register 33 and sets it in the register 37 via the error check circuit 36 at the timing Ty. The data thus set in the register 37 is provided on the write data line 15 and written in the replace block of the data memories 1-1 to 1-n and, at the same time, delivered as read data to the access requesting terminal.

In the case of NF.CHG="1", the operation proceeds to the move out flow (e.g. operations to move out the data of the replace block from the data memories to the main memory—since the replace block has been "changed" this must be done to update main memory). In the move out flow, 64 bytes of data are provided to the main memory, and move out of one block to the main memory is accomplished by applying the move out flow of eight-byte unit processing to the shift register 51 eight times in succession. In this move out flow, the replace block of the data memory 1-1 to 1-n is moved out and then the operation proceeds to the move in flow. The operation of the move in flow is the same as described previously.

The move in flow is followed by the tag move in flow, in which an address (of the moved in data) is registered in the tag memory, the content of the replace memory 4 is updated and "0" is written in the change bit memory (in relation to the moved in data).

The processing for writing the data of one part of the block is carried out in the same manner as in the aforesaid read processing. That is, the tag memories 2-1 to 2-n are read out and it is detected by the comparison results of the comparators 6-1 to 6-n whether the data of the requested address exists or not in the data memories. In a case where the coincidence detection signal FOUND is "1", "1" is written in the change bit memories 3-1 to 3-n (in relation to the data of the requested address—which is now to be changed), and a block including the data of the requested address is read out from the data memory. Then the read data on the read data line 16 and the write data on the write data line 40 are applied to the merge circuit 35 and data merged in accordance with the byte mark signal on the signal line 44 is checked by the error check circuit 36; in this case, if no error is detected, the data is set in the register 37 and then provided on the write data line 15. From the write data line 15 the data is applied to the data memories 1-1 to 1-n, wherein the data is written in one part of the block which is determined by the intra-block address and the write enable signal WE (WE1-0 to WE1-7 ... WEn-0 to WEn-7) from the write control circuit 9.

In the case where the data of the requested address does not exist in the data memories, the replace block is determined by the content read out from the replace memory 4 and, when no bit change is detected in relation to the replace block by the contents read out from the change bit memories 3-1 to 3-n, the move in data and the write data are merged together and the merged data is provided as write data to the data memory, wherein the data is written in a designated block as is the case with the foregoing. Then the requested address is registered in the tag memory and "1" is written in the change bit memory in relation to the address of the written in data. When a bit change is detected in relation to the replace block, the replace block is moved out and, thereafter, a data write is conducted by the same operations as described above.

The above operations are substantially the same as employed in the swap system.

Embodiments of the present invention have their primary feature in relation to block store processing.

A description will be given first in connection with the case where the data of the requested address REQA exists in the buffer memory. In this case, the coincidence detection signal FOUND becomes "1" and the operation code OPC of the control signal CONT . T(x-1) which is output from the shift register 51 at the timing T(x-1) is decoded by the decoder 52, by which the block store signal becomes "1" (when block store processing is required). Further, since only the valid signal V of the sub operation code becomes "1", the gate circuit 56 outputs "1" and the read enable signal on the signal line 43 becomes "1".

The write data is set from the write data line 40 in the registers 47 of the data pool circuit 31 and since the read enable signal is "1", the data is set in the register 32 via the selectors 48 and 49 and the gate circuits 38 and 39 at the time Tx. In this case, the byte mark signals are all "1".

Since the byte mark signals from the signal line 44 are all "1", the merge circuit 35 provides the write data in the register 32 to the error check circuit 36 regardless of read data of the register 33 and the data applied to the error check circuit 36 is set in the register 37 at the timing Ty.

At the timing Ty the operation code OPC of the control signal CONT . Ty is decoded by the decoder 80 and the block store signal BSTR becomes "1". Moreover, since the valid signal V of the sub operation code is "1", the gate circuit 64 provides an output "1".

In block store, data is all written in one block of the data memory by applying to the shift register 51 eight times in succession (8 bytes×8=64 bytes) a first flow relating to eight-byte unit processing in which the block store signal BSTR is "1" and the valid signal V is "1". For example, assuming that in the first time first flow, the intra-block address on the address line 23 is decoded by the decoder 81 and the write enable signal WE1-0 becomes "1" in accordance with the output signals VT1 to VTn from the selectors 10-1 to 10-n, the write data provided from the register 37 to the data memories 1-1 to 1-n via the write data line 15 is written in the block B1-0 of the data memory 1-1. Thereafter, when the second to eighth first flows of the block store are sequentially applied to the shift register 51, the intra-block address on the address line 23 is set to such a value that 1 is added to the value in the previous first flow, by which the write enable lines WE1-1 to WE1-7 sequentially become "1" and the data is written into the blocks B1-1 to B1-7 of the data memory 1-1 in a sequential order. Further, "1" is written in the position of the corresponding block of the change bit memory.

In a case whera the data of the requested address does not exist in the buffer memory and the content of the replace block has not been changed after the replace block was loaded into the buffer memory from the main memory, the coincidence detection signal FOUND is "0" /nd the noncoincidence-nonchange signal NF . $\overline{CHG}$ on the signal line 19 is "1". In this case, data is written, in the data memories 1-1 to 1-n in the same manner as in the case where the coincidence detection signal FOUND is "1". That is, the move out of the replace block and the move in of the block including the data of the requested address from the main memory do not take place. At the timing Tx, the write data is set in the register 32 and since the byte mark signals are all "1", the data in the register 32 is set in the register 37 at the timing Ty regardless of the data in the register 33 and the data set in the register 32 is provided on the write data line 15, from which it is written in the data memory by the write enable signal which is output in accordance with the control signal CONT . Ty of the timing Ty and the intra-block address.

In a case where the content of the replace block has been changed after the replace block was loaded into the buffer memory from the main memory, the non-coincidence-change signal NF . CHG on the signal line 20 becomes "1". In this case, the operation proceeds to the move out flow. That is, the operation code indicates the block store and the move out signal MO of the sub operation code becomes "1". As a consequence, the move out of the replace block takes place. Next, the operation proceeds to the move in flow. Namely, the operation code indicates block store and the move in signal MI of the sub operation code becomes "1". In this move in flow, since the control signal CONT . T(x-1) becomes such that V="1", MI="1", MO="0" and TMI="0", the gate circuit 60 produces an output "1" and the block store signal BSTR which is derived from the decoder 52 becomes "1". Since NF . CHG="1", the gate circuit 58 yields an output "1" and the read enable signal on the signal line 43 becomes "1".

The write data pooled in the data pool circuit 31 is set in the register 32 via the gate circuits 38 and 39 at the timing Tx and since the byte mark signals on the signal line 44 are all "1", the merge circuit 35 sets only the content of the register 32 in the register 37 via the error check circuit 36 at the timing Ty without regard to the data in the register 33 in which move in data of the register 34 have been set.

At the timing Ty the control circuit CONT.Ty is applied to the write control circuit 9 and the gate circuits 70 and 66 yield outputs "1" and the data is written into the data memory by the write enable signal which is determined by the output from the decoder 81 and the outputs from the selectors 10-1 to 10-n.

Next, the operation shifts to the tage move in flow.

In the block store instruction, in the case where NF . $\overline{CHG}$="1", that is, in the case where the data of the requested address does not exist in the data memories 1-1 to 1-n and the content of the replace block has not been changed after the block was loaded into the data memories 1-1 to 1-n, as described previously, data is written in the replace block directly without conducting the move out flow and the move in flow. Accordingly, when the block store instruction continues, an invalid operation time in the write processing is removed, permitting high-speed processing. Especially in the case of handling large data, it happens that data is written by means of a block store instruction in an area of a size which is equal to or an integral multiple of the block of the buffer memory; accordingly, the elimination of the move out and the move in operation makes it possible to greatly increase the throughput of the buffer memory.

In a buffer memory of the swap system, in the writing of data into an area of a size equal to or an integral multiple of a block of the buffer memory, when it is detected that a block including a write address does not exist in the buffer memory, data is written in a replace block of the buffer memory directly without conducting at least an operation of moving in a block from a main memory.

**Claims**

1. A control system for a buffer memory (1-1 to 1-n, 2-1 to 2-n; 3-1 to 3-n) and a main memory, operable on the basis of a swap procedure, in which ordinary memory access involves access only to the buffer memory, and operable so that, when data of a requested address does not exist in the buffer memory, a replace block is moved from the buffer memory into the main memory and a block including data of the requested address is moved from the main memory into the buffer memory (the swap procedure), the control system comprising means (6-1 to 6-n, 12, 17) for detecting whether or not a block including the data of the requested address exists in the buffer memory, and means (7, 18, 13, 14, 19, 20) for detecting whether or not a replace block has been changed since it was loaded into the buffer memory, the system being operable, when it is detected that data corresponding to a requested address does not exist in the buffer memory, to move the replace block from the buffer memory to the main memory if the replace block has been changed since it was loaded into the buffer memory, characterised in that when data of a size equal to or an integral multiple of a block of the buffer memory is to be written and it is detected that data corresponding to the requested write address does not exist in the buffer memory, the data to be written is written into the buffer memory space of the replace block, without moving a block of data corresponding to the requested write address from the main memory into the buffer memory.

2. A system as claimed in claim 1, in combination with the buffer memory, wherein the buffer memory comprises

data memories (1-1 to 1-n), for storing data from the main memory for memory access;

tag memories (2-1 to 2-n), for storing tag information indicative of the addresses of data existing in the data memories;

change bit memories (3-1 to 3-n), for storing change information indicating whether or not data existing in the data memories has been changed since it was loaded into the data memories;

a replace memory (4), for storing information relating to blocks of data in the data memories which can be moved out from the buffer memory to the main memory to make a space for data of a requested address;

write control means (9), operable for controlling where data is stored in the data memories, in dependence upon a requested address and the information of tag memories and the change bit memories and the replace memory; and

a buffer memory write control circuit (Fig. 3) for controlling the movement of blocks of data from the main memory to the data memories and the writing into the data memories of data to be written at a requested write address.

3. A system as claimed in claim 2, wherein the buffer memory write control circuit comprises:

a data pool circuit (31), for storing the data to be written;

a control register (51), for providing control signals for control of the movement of data and the writing of data into the data memories;

a write data control circuit (30), operatively connected to the control register (51), for generating an enable signal for controlling the storing of data into the data memories in dependence upon the control signals and the tag and change information: and

A merging circuit (35), operable for merging and storing in the data memories data to be written, data to be moved into the buffer memory from the main memory, and data stored in the data memories, so that data stored in the data memories can be updated by data to be written, replaced by data moved in from the main memory, or so that the data stored in the data memories and read out therefrom can be returned to the data memories unaltered.

**Patentansprüche**

1. Steuerungssystem für einen Pufferspeicher (1-1 bis 1-n, 2-1 bis 2-n; 3-1 bis 3-n) und einen Hauptspeicher, der auf der Basis wechselnden Heraus- und Hineinlesens arbeitet, bei welchem der gewöhnliche Speicherzugriff den Zugriff lediglich zu dem Pufferspeicher umfaßt, und der so betreibbar ist, daß dann, wenn Daten einer angeforderten Adresse nicht in dem Pufferspeicher existieren, ein Ersatzblock von dem Pufferspeicher in den Hauptspeicher verschoben wird und ein Block, der Daten der angeforderten Adresse enthält, von dem Hauptspeicher in den Pufferspeicher verschoben wird (das wechselnde Heraus- und Hineinlesen), welches Steuerungssystem Einrichtungen (6-1 bis 6-n, 12, 17) umfaßt, um festzustellen, ob in dem Pufferspeicher ein Block, der Daten der angeforderten Adresse enthält, existiert oder nicht, und Einrichtungen (7, 18, 13, 14, 19, 20), um festzustellen, ob ein Ersatzblock, seitdem er in den Pufferspeicher geladen wurde, geändert worden ist oder nicht, wobei das System betreibbar ist, wenn festgestellt wird, daß Daten, die einer angeforderten Adresse entsprechen, in dem Pufferspeicher nicht existieren, um den Ersatzblock von dem Pufferspeicher in den Hauptspeicher zu verschieben, wenn der Ersatzblock geändert worden ist, seitdem er in den Pufferspeicher geladen wurde, dadurch gekennzeichnet, daß dann, wenn Daten von einer Größe gleich einem oder einem ganzen Vielfachen eines Blocks des Pufferspeichers geschrieben werden sollen und festgestellt wird, daß Daten, die der angeforderten Schreibadresse entsprechen, nicht in dem Pufferspeicher existieren, die zu schreibenden Daten in den Pufferspeicherraum des Ersatzblockes geschrieben werden, ohne einen Datenblock, der der angeforderten Schreibadresse entspricht, von dem Hauptspeicher in den Pufferspeicher zu verschieben.

2. System nach Anspruch 1, in Kombination mit einem Pufferspeicher, bei welchem der Pufferspeicher umfaßt

Datenspeicher (1-1 bis 1-n), zur Speicherung von Daten von dem Hauptspeicher für den Speicherzugriff;

Kennzeichenspeicher (2-1 bis 2-n), für die Speicherung von Kennzeicheninformation, die anzeigt, ob die Adressen von Daten in den Datenspeichern existieren;

Änderungsbitspeicher (3-1 bis 3-n), zur Speicherung der Änderungsinformation, die anzeigt, ob Daten, die in den Datenspeichern existieren, seitdem sie in die Datenspeicher geladen wurden, geändert worden sind oder nicht;

einen Ersatzpeicher (4), zur Speicherung von Information bezüglich der Blöcke von Daten in den Datenspeichern, die aus dem Pufferspeicher zu dem Hauptspeicher verschoben werden können, um Platz für Daten der angeforderten Adresse zu machen;

Schreibsteuereinrichtungen (9), die betreibbar sind, um zu steuern, wo Daten in den Datenspeichern gespeichert werden, in Abhängigkeit von einer angeforderten Adresse und der Information von Kennzeichenspeichern und den Änderungsbitspeichern und des Ersatzspeichers; und

eine Pufferspeicher-Schreibsteuerschaltung (Fig. 3) zur Steuerung der Verschiebung von Blöcken von Daten von dem Hauptspeicher zu den Datenspeichern und zum Schreiben von zu schreibenden Daten in Datenspeicher unter einer angeforderten Schreibadresse.

3. System nach Anspruch 2, bei welchem die Pufferspeicher-Schreibsteuerschaltung umfaßt:

eine Datenvorratsschaltung (31), zur Speicherung der zu schreibenden Daten;

ein Steuerregister (51), um Steuerungssignale für die Steuerung der Verschiebung von Daten und für das Schreiben von Daten in die Datenspeicher zu liefern;

eine Schreibdatensteuerschaltung (30), die wirkungsmäßig mit dem Steuerregister (51) verbunden ist, zur Erzeugung eines Freigabesignals für die Steuerung der Speicherung von Daten in Datenspeicher in Abhängigkeit von den Steuersignalen und der Kennzeichen- und Änderungsinformation; und

eine Misch-Schaltung (35), die betreibbar ist, um Daten, die zu schreiben sind, Daten, die von dem Hauptspeicher in den Pufferspeicher verschoben werden sollen, und Daten, die in den Datenspeichern gespeichert sind, zu mischen und in den Datenspeichern zu speichern, so daß Daten, die in Datenspeichern gespeichert sind, durch zu schreibende Daten aktualisiert werden können, durch Daten ersetzt werden können, die von dem Hauptspeicher hereingeholt werden, oder so, daß Daten, die in den Datenspeichern gespeichert sind und von diesen ausgelesen werden, unverändert zu den Datenspeichern zurückgeführt werden können.

**Revendications**

1. Système de commande pour mémoire tampon (1-1 à 1-n, 2-1 à 2-n; 3-1 à 3-n) et mémoire principale, pouvant fonctionner sur la base d'une procédure de permutation, dans lequel l'accès à une mémoire ordinaire n'implique que l'accès à la mémoire tampon, et pouvant fonctionner de telle sorte que, lorsque la donnée d'une adresse demandée ne se trouve pas dans la mémoire tampon, un bloc de remplacement est déplacé de la mémoire tampon dans la mémoire principale et un bloc incluant la donnée de l'adresse demandée est déplacé de la mémoire principale dans la mémoire tampon (procédure de permutation), le système de commande comprenant des moyens (6-1 à 6-n, 12, 17) pour détecter si un block incluant la donné de l'adresse demandée se trouve ou non dans la mémoire tampon, et des moyens (7, 18, 13, 14, 19, 20) pour détecter si un bloc de remplacement a été changé ou non depuis qu'il a été chargé dans la mémoire tampon, le système pouvant fonctionner, quand il est détecté que la donnée correspondant à une adresse demandée ne se trouve pas dans la mémoire tampon, pour déplacer le bloc de remplacement de la mémoire tampon à la mémoire principale si le bloc de remplacement a été changé depuis qu'il a été chargé dans la mémoire tampon, caractérisé en ce que, lorsqu'une donnée d'une longueur égale à un bloc ou à un multiple entier d'un bloc de la mémoire tampon doit être écrite et qu'il est détecté que la donnée correspondant à l'adresse d'écriture demandée n'est pas dans la mémoire tampon, la donnée à écrire est écrite dans l'espace de mémoire tampon du bloc de remplacement, sans déplacer un bloc de donnée correspondant à l'adresse d'écriture demandée de la mémoire principale dans la mémoire tampon.

2. Système selon la revendication 1, en combinaison avec la mémoire tampon, dans lequel la mémoire tampon comprend:

des mémoires de données (1-1 à 1-n), pour mémoriser des données provenant de la mémoire principale pour un accès à la mémoire;

des mémoires de drapeaux (2-1 à 2-n), pour mémoriser des informations drapeaux indiquant les adresses de données se trouvant dans les mémoire de données;

des mémoires de bits de changement (3-1 à 3-n), pour mémoriser des informations de changement indiquant si une donnée se trouvant dans les mémoires de données a été changée ou non depuis qu'elle a été chargée dans les mémoires de données;

une mémoire de remplacement (4), pour mémoriser des informations relatives à des blocs de données dans les mémoires de données qui peuvent être déplacés de la mémoire tampon à la mémoire principale pour faire de la place pour la donnée d'une adresse demandée;

un moyen de commande d'écriture (9), pouvant fonctionner pour contrôler où une donnée est mémorisée dans les mémoires de données, selon une adresse demandée et les informations des mémoires de drapeaux et des mémoires de bits de changement et de la mémoire de remplacement; et

un circuit de commande d'écriture en mémoire tampon (Figure 3) pour commander le déplacement de blocs de données de la mémoire principale aux mémoires de données et l'écriture dans les mémoires de données d'une donnée à écrire à une adresse d'écriture demandée.

3. Système selon la revendication 2, dans lequel le circuit de commande d'écriture en mémoire tampon comprend:

un circuit de regroupement de données (31), pour mémoriser la donnée à écrire;

un registre de commande (51), pour fournir des signaux de commande en vue de la commande du déplacement d'un donnée et l'écriture d'une donnée dans les mémoires de données;

un circuit de contrôle de donnée d'écriture (30), connecté en fonctionnement au registre de commande (51), pour engendrer un signal de validation pour commander la mémorisation d'une donnée dans les mémoires de données selon les signaux de commande et les informations de drapeau et de changement; et

un circuit de fusionnement (35), pouvant fonctionner pour fusionner et mémoriser dans les mémoires de données une donnée à écrire, une donnée à déplacer de la mémoire principale dans la mémoire tampon, et une donnée mémorisée dans les mémoires de données, de sorte qu'une donnée mémorisée dans les mémoires de données peut être mise à jour par une donnée à écrire, remplacée par une donnée déplacée dedans à partir de la mémoire principale, ou de sorte que la donnée mémorisée dans les mémoires de données et lue dans celles-ci peut être renvoyée aux mémoires de données sans qu'elle soit modifiée.

# FIG. 1

# FIG. 2

# FIG. 3

0 030 463

# FIG. 4

VALID

OPERATION CODE

SUB OPERATION CODE

$T_1$  $T_2$ ----- $T_{(x-1)}$  $T_x$ ------- $T_y$

V

M0

M1

TM1

51

CONT·$T_{(x-1)}$ (30)

CONT·$T_y$ (9)

4

# FIG. 5

# FIG. 6